# EUROPÄISCHE PATENTSCHRIFT

(11) **EP 0 838 486 B1**
(45) Veröffentlichungstag und Bekanntmachung des Hinweises auf die Patenterteilung: **16.11.2005**
(21) Anmeldenummer: 97115080.0
(22) Anmeldetag: 01.09.1997
(51) Int. Cl.: C08G 18/54, C08G 18/08

(54) **Wässrige Harzdispersionen**
Aqueous resin dispersions
Dispersions aqueuses de résine

(30) Priorität: 23.10.1996 DE 19643704
(43) Veröffentlichungstag der Anmeldung: 29.04.1998
(73) Patentinhaber: Degussa AG, 40474 Düsseldorf (DE)
(72) Erfinder: Ortelt, Martina, Dr., 45770 Marl (DE); Lange, Hartwig, Dr., 45721 Haltern (DE); Janischewski, Klaus, 46284 Dorsten (DE)

(56) Entgegenhaltungen:
- EP-A- 0 617 103
- DE-A- 2 408 865
- GB-A- 1 333 728
- DATABASE WPI Week 3488 Derwent Publications Ltd., London, GB; AN 88-238215 XP002050920 & JP 63 170 468 A (DAINIPPON INK & CHEM. KK) , 14.Juli 1988

## Beschreibung

Die vorliegende Erfindung betrifft wäßrige Keton-, Keton/Aldehyd- oder Harnstoff/Aldehyd-Harzdispersionen, ein Verfahren zu deren Herstellung und ihre Verwendung.

Die Kondensation von Keton-, Keton/Aldehyd- und Harnstoff/Aldehyd-Harzen ist bekannt (Ullmann's Encyclopedia of Industrial Chemistry, VCH Verlagsgesellschaft mbH Weinheim 1993, Vol. 23, S. 99 - 105). Solche Harze sind im allgemeinen wasserunlöslich.

In der DE-OS 25 42 090 werden Sulfonsäuregruppen tragende wasserlösliche Verbindungen beschrieben, die abweichend vom erfindungsgemäßen Verfahren in einer gemeinsamen Kondensationsreaktion aus Cycloalkanon, Formaldehyd und Alkalibisulfit erhältlich sind.

In der DE-OS 31 44 673 werden wasserlösliche Kondensationsprodukte aufgeführt, die ebenfalls durch gemeinsame Umsetzung von Ketonen, Aldehyden und Säuregruppen einführenden Verbindungen erhalten werden. Beispiele für letztere sind Sulfite, Amidosulfonsäure-, Aminoessigsäure- und Phosphorigsäuresalze.

Nach DE-OS 25 42 090 und DE-OS 31 44 673 werden Elektrolyt (z.B. Na-Ionen) enthaltende Produkte erhalten. Solche Harze verschlechtern jedoch unter anderem den Korrosionsschutz von Beschichtungssystemen.

Die EP 0 617 103 A1 beschreibt die Umsetzung von Polyisocyanaten (a) und Dihydroxylverbindungen (b) mit einem Molekulargewicht von 500 bis 5000, die keine in ionische Gruppen überführbare Gruppen (z. B. Carbonsäuregruppen), wohl aber andere funktionelle Gruppen wie Ester- oder Ethergruppen (s. S. 3, Zeilen 17-21), enthalten. Das so erhaltene Polyurethan wird noch mit einer Verbindung (c), die neben NCO-reaktiven Gruppen noch eine in eine ionische Gruppe überführbare Gruppe enthält, und gegebenenfalls mit Diolen oder Polyolen (d) mit einem Molekulargewicht von 60 bis 500, die keine weiteren funktionellen Gruppen tragen (s. S. 4, Zeilen 5 bis 15), umgesetzt. Anschließend wird dieses Reaktionsprodukt mit einem Kondensationsharz umgesetzt und ins Wasser gebracht.

Die DE-OS 24 08 865 beschreibt Melaminformaldehyd-Polyurethanharze, die wasserverdünnbar bzw. wasserdispergierbar sind. Die Basis des Polyurethanharzes bilden Polykondensationsprodukte auf Alkydharzbasis (s. S. 2, erster Abschnitt). Alkydharze werden aus Carbonsäuren, ungesättigten Fettsäuren, Diolen und Polyolen hergestellt.

DE-OS 34 06 473 sowie DE-OS 34 06 474 bzw. EP-A-0 154 835 beschreiben Verfahren zur Herstellung von stabilen wäßrigen Dispersionen von Harnstoff/Aldehyd-Harzen bzw. Keton/(Aldehyd)-Harzen, wonach man die Harzschmelze oder deren hochkonzentrierte Lösung in Gegenwart von organischen Schutzkolloiden ggf. unter Zusatz von Emulgatoren in Wasser dispergiert. Nachteilig an diesen Verfahren ist die Tatsache, daß die organischen Schutzkolloide und Emulgatoren die Anwendung der wäßrigen Keton/(Aldehyd)- bzw. Harnstoff/Aldehyd-Harze im Beschichtungssektor stören. Die hydrophilen Schutzkolloide und ggf. Emulgatoren verbleiben in der Beschichtung und machen sie so feuchtigkeitsempfindlich. Die Beschichtung quillt bei Feuchtigkeitseinwirkung, verliert an Härte und büßt an Korrosionsschutzwirkung ein.

Die Aufgabe der Erfindung bestand darin, Keton-, Keton/Aldehyd- oder Harnstoff/Aldehyd-Harzdispersionen und ein Verfahren zu deren Herstellung zu entwickeln. Die Harzdispersionen sollen verseifungs- bzw lagerstabil sein und die oben beschriebenen Nachteile nicht aufweisen. Die für solche Harze üblichen Eigenschaften sollen dabei beibehalten werden.

Die der Erfindung zugrundeliegende Aufgabe wird gelöst, indem man hydroxylhaltige Keton-, Keton/Aldehyd-, Harnstoff/Aldehyd-Harze oder deren hydrierte Folgeprodukte mit hydrophil modifizierten (Poly)Isocyanaten wie in Anspruch 1 beschrieben umsetzt.

Nach Neutralisation und Wasserzugabe ergeben die so modifizierten erfindungsgemäßen Keton-, Keton/Aldehyd-, Harnstoff/Aldehyd-Harze stabile wäßrige Lösungen, Verdünnungen und Dispersionen.

Die erfindungsgemäßen wäßrigen Systeme sind im Vergleich zu den nach dem Stand der Technik bereits bekannten Systemen vollkommen verseifungsstabil und enthalten keinerlei störende Zusätze z. B. in Form von Emulgatoren, Schutzkolloiden oder Elektrolyten.

Gegenstand der vorliegenden Erfindung sind wäßrige Harzdispersionen erhältlich durch Umsetzung oder anteilige Umsetzung von
I. hydroxylhaltigen Keton-, Keton/Aldehyd-, Harnstoff/Aldehyd-Harzen oder deren hydrierten Folgeprodukten und
II mindestens einem hydrophil modifizierten Isocyanat mit mindestens einer freien NCO-Gruppe und/oder di- bis tetrafunktionellem Polyisocyanat mit einer unterhalb 800 g/mol liegenden Molmasse, bestehend aus dem Umsetzungsprodukt mindestens eines Polyisocyanats mit Verbindungen, die zusätzlich zur hydrophilen oder potentiell hydrophilen Gruppe mindestens eine gegenüber Isocyanatgruppen reaktionsfähigen Funktion aufweisen und die einen gemäß dem Zerewitinoff-Test aktiven Wasserstoff besitzen, sowie mindestens eine hydrophile Gruppe und/oder eine potentiell hydrophile Gruppe besitzen, wie in Anspruch 1 definiert, wobei die Komponente II entweder bereits neutralisiert mit Komponente I umgesetzt wird oder das Umsetzungsprodukt von I und II neutralisiert wird,
und anschließender Vermengung des neutralisierten Harzes mit Wasser.

Die hydrophile Modifizierung von II erfolgt dabei durch Umsetzung eines (Poly)Isocyanats und/oder Mischungen verschiedener (Poly)Isocyanate mit Verbindungen mit (zusätzlich zur hydrophilen oder potentiell hydrophilen Gruppe) mindestens einer gegenüber Isocyanatgruppen reaktionsfähigen Funktion, z. B. OH, NH, die einen gemäß dem Zerewitinoff-Test aktiven Wasserstoff besitzt, und mit mindestens einer hydrophilen Gruppe und/oder einer potentiell hydrophilen Gruppe, d. h die nach Neutralisation hydrophil wird ausgewählt aus Aminoalkoholen, Aminocarbonsäuren, Hydroxysulfonsäuren, Aminosulfonsäuren sowie Hydroxycarbonsäuren, wie besonders bevorzugt Dimethylolpropionsäure.

Die hydrophile Modifizierung kann außerdem mit bereits neutralisierten Verbindungen vorgenommen werden.

Hydroxycarbonsäuren wie insbesondere Dimethylolpropionsäure werden daher besonders bevorzugt, da sie neutralisiert mit flüchtigen Basen, wie z. B. Aminen, starke hydrophile Wirkung zeigen, nach Abdunsten der flüchtigen Base diese Wirkung jedoch stark zurückgeht, so daß z. B. Beschichtungen bei Feuchtigkeitseinwirkung nicht erweichen oder weiß anlaufen.

Die Dimethylolpropionsäure wird außerdem besonders bevorzugt, da sie über ihre zwei Hydroxylgruppen zwei hydrophobe Polyisocyanate (potentiell) hydrophil zu modifizieren vermag.

Geeignete Polyisocyanate zur Herstellung von II sind vorzugsweise di- bis tetrafunktionelle Polyisocyanate mit einer unterhalb 800 g/mol liegenden Molmasse mit aliphatisch, (cyclo)aliphatisch und/oder cycloaliphatisch gebundenen Isocyanatgruppen, wie sie im Bereich der Polyurethanlacke üblicherweise eingesetzt werden, sowie auch Mischungen von diesen: 1-Isocyanato-3.3.5-trimethyl-5-isocyanatomethylcyclohexan (Isophorondiisocyanat; IPDI), Trimethylhexamethylendiisocyanat (TMDI), 1.6-Diisocyanatohexan (HDI), Bis-(4-isocyanatohexyl)-methan (H₁₂ MDI), sowie weitere Polyisocyanate, die in der DE-OS 24 56 469, S.5 und 6 aufgerührt sind.

Weniger bevorzugt, aber für die Erfindung geeignet, sind aus den monomeren Polyisocyanaten erhältliche Oligomere, deren Gewinnung dem Stand der Technik entspricht und z.B. im Journal für Praktische Chemie 336 (1994), 185 - 200 bzw. Farbe und Lack 100, 5 (1994), 330 - 335 und der dort angegebenen Literatur beschrieben ist. Dabei handelt es sich um Polyisocyanate mit Biuret-, Uretdion- oder Isocyanuratstruktur, letztere erhältlich durch Cyclotrimerisierung der Monomeren. Ebenfalls geeignet sind zudem Polyisocyanate als Produkte aus mehrwertigen Alkoholen und/oder aus Aminen mit monomeren Isocyanaten, wie z. B. das Produkt aus Trimethylolpropan und Isophorondiisocyanat.

Besonders bevorzugt ist ein hydrophil modifiziertes Polyisocyanat II aus Dimethylolpropionsäure und Isophorondiisocyanat (IPDI) im Molverhältnis 1 : 2.

Die Umsetzung von I und II kann in Substanz oder vorzugsweise in Gegenwart eines Hilfslösemittels erfolgen. Bevorzugte Feststoffgehalte sind bei Verwendung eines Hilfslösemittels 50 bis 95 Masse-%, besonders bevorzugt 60 bis 80 Masse-%.

Geeignete Hilfslösemittel sind entweder bevorzugt solche, die einen Siedepunkt unterhalb 100°C bei 1013 hPa besitzen und sich destillativ aus dem fertigen wäßrigen System wieder vollständig bis auf einen Restgehalt ≤ 0,5 Masse-% abtrennen und wiederverwenden lassen, wie z.B. Aceton, Methylethylketon oder Tetrahydrofuran, oder weniger bevorzugt auch ggf hohersiedende, die im wasserverdunnbaren System verbleiben, wie z B Butylglykol, Butyldiglykol oder N-Methylpyrrolidon Die unterhalb 100 °C siedenden Hilfslösemittel sind daher bevorzugt, weil sie die Herstellung rein wäßriger, lösemittelfreier und damit besonders umweltverträglicher Dispersionen ermöglichen. Die Verwendung der höhersiedenden Lösemittel - ggf auch anteilig - oder Lösemittelgemische mit Siedepunkt oberhalb 100 °C ist technisch möglich, aber nicht bevorzugt und nicht angestrebt. Ein Vorteil des erfindungsgemäßen Verfahrens liegt gerade auch darin, daß auf organische Lösemittel in der fertigen wäßrigen Harzdispersion völlig verzichtet werden kann und trotzdem feststoffreiche, stabile Dispersionen erhalten werden.

Die Umsetzung von I und II läßt man vorzugsweise soweit voranschreiten, daß ein Rest-NCO-Gehalt von 1 % NCO (Bestimmung nach DIN 53185) unterschritten wird, und besonders bevorzugt soweit voranschreiten, daß der Rest-NCO-Gehalt des Produktes aus I und II im Bereich von 0,1 bis 0,5 % NCO liegt. Bei der Reaktion von I und II unumgesetzt verbleibende NCO-Funktionen lassen sich, dem Stand der Technik entsprechend, entweder zu Kettenverlängerungsreaktionen, z. B. durch Zugabe von Polyaminen oder Wasser nutzen, oder ggf. läßt sich ein Kettenabbruch durch Zugabe bezüglich NCO-Gruppen monofunktioneller Verbindungen (z.B. Monoalkoholen, Monoaminen) einleiten.

Die Neutralisation der erfindungsgemäß hergestellten Harze kann mit anorganischen und organischen Basen erfolgen, wie z.B. Ammoniak oder organischen Aminen. Vorzugsweise verwendet man primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin. Besonders bevorzugt werden flüchtige tertiäre Amine, insbesondere Dimethylethanolamin, Diethylethanolamin, 2-Dimethylamino-2-methyl-1-propanol, Triethylamin, Tripropylamin und Tributylamin.

Die Neutralisationsmenge richtet sich nach dem Gehalt potentiell neutralisierbarer Gruppen im hydrophil modifizierten Polyisocyanat und beträgt vorzugsweise 50 bis 130 % der Neutralisationsmenge, die für eine stöchiometrische Neutralisation notwendig ist

Das neutralisierte hydrophile Harz bzw. die Harzlösung leitet man entweder in Wasser ein oder versetzt es bevorzugterweise unter Rühren mit Wasser Vor Wasserzugabe kann das Umsetzungsprodukt aus I und II gegebenenfalls mit weiteren nicht hydrophil eingestellten Harzen oder anderen Komponenten kombiniert und dann gemeinsam dispergiert werden. Durch diese Maßnahme läßt sich ein technisch vorteilhafter hoher Feststoffgehalt der Dispersionen von über 45 Masse-% erzielen.

Nach dem Dispergieren wird das organische Hilfslösemittel bevorzugterweise im Vakuum entfernt und ggf. wieder aufgearbeitet.

Die erfindungsgemäßen Harzdispersionen besitzen gute Lagerstabilitäten und eignen sich als Harze oder Zusatzharze in Beschichtungsstoffen wie z.B. Lacken und Druckfarben. Sie eignen sich weiterhin für wäßrige Kugelschreiberpasten und Tinten. Auch für den Einsatz in Klebstoffen, wie z.B. für die Verklebung von Textilien, Leder, Papier und ähnlichen Werkstoffen, sind solche Harzdispersionen geeignet.

Sie zeigen gute Benetzungseigenschaften auch in Kombination mit schwierigen organischen Pigmenten und können daher als glanzförderndes Zusatzharz in Pastenbindemitteln verwendet werden.

Aufgrund des üblicherweise sehr hohen Erweichungspunktes, verbunden mit guter Löslichkeit und Verträglichkeit ergeben sich Beschichtungen mit schneller An- und Durchtrocknung und guter Blockfestigkeit.

### Beispiel

Die Erfindung wird an folgendem Beispiel erläutert.

### 1) Herstellung des hydrophil modifizierten Polyisocyanats II und dessen Umsetzung mit I

Zu einer Mischung von 134 g Dimethylolpropionsäure (DMPS), 380 g Aceton und 6 g einer 10 Masse-%igen Lösung von Dibutylzinndilaurat (DBTL) in Aceton gibt man unter Rühren 444 g Isophorondiisocyanat so schnell hinzu, daß die exotherme Reaktion gut beherrschbar bleibt. Anschließend rührt man bei 60 °C so lange weiter, bis sich die DMPS vollständig gelöst und die NCO-Zahl der Lösung 8,7 % NCO (Bestimmung nach DIN 53185) unterschritten hat.

Zur auf Raumtemperatur abgekühlten Lösung setzt man danach unter Rühren 2300 g einer 55 Masse-%igen acetonischen Lösung eines bezüglich der Ketofunktion nachhydrierten Acetophenon/Formaldehyd-Harzes (Kunstharz SK der Fa.Hüls AG) sowie 12 g einer 10 Masse-%igen acetonischen DBTL-Lösung hinzu und erwärmt auf die Rückflußtemperatur von ca. 60 °C. Man läßt bei dieser Temperatur solange weiterrühren, bis die NCO-Zahl der Lösung 0,3 % NCO unterschritten hat.

### 2) Dispergieren des aus I und II erhaltenen hydrophil modifizierten Harzes

### Alternative A:

Die unter 1) hergestellte Lösung des hydrophil modifizierten Harzes neutralisiert man bei Raumtemperatur unter Rühren durch Zugabe von 89 g Dimethylaminoethanol und dispergiert die Lösung durch Eintragen von 4200 g voll entsalzenen Wassers unter Rühren. Das Hilfslösemittel Aceton sowie anteilig Wasser entfernt man im Vakuum und erhält eine lagerstabile, feinteilige, leicht opaleszierende Harzdispersion mit einem Feststoffgehalt von ca. 33 Masse-%.

### Alternative B:

Die unter 1) hergestellte Lösung versetzt man unter Rühren mit 3300 g einer 55 Masse-%igen acetonischen Lösung eines bezüglich der Ketogruppe nachhydrierten Acetophenon/ Formaldehydharzes (Kunstharz SK der Fa Hüls AG), neutralisiert bei Raumtemperatur unter Rühren mit 89 g Dimethylaminoethanol und dispergiert die Lösung durch Eintragen von 4400g voll entsalzenen Wassers unter Rühren. Das Hilfslösemittel Aceton sowie anteilig Wasser entfernt man im Vakuum und erhält eine lagerstabile weißliche Dispersion mit einem Feststoffgehalt von ca.50 Masse-%.

### 3) Eigenschaften der Dispersion und daraus hergestellter Pigmentpasten

### Lagerstabilität

Die Dispersionen A und B nach Punkt 2) wurden in Bezug auf Veränderungen des pH-Wertes, der Viskosität und des optischen Erscheinungsbildes auf Lagerstabilität untersucht.

| Eigenschaft | A | B |
|---|---|---|
| pH-Wert: | | |
| Ausgangswert | 8,9 | 8,8 |
| nach ½ Jahr | 8,9 | 8,8 |

| Viskosität 23 °C**: | | |
|---|---|---|
| Ausgangswert | 375 - 714 mPa*s | 69 - 138 mPa*s |
| nach ½ Jahr | 335 - 563 mPa*s | 67 - 135 mPa*s |

| Aussehen: | | |
|---|---|---|
| nach Herstellung | leicht opaleszierend | weiß |
| nach ½ Jahr | leicht opaleszierend | weiß |

| | | |
|---|---|---|
| ** Rotationsviskosimeter ; D: 100 bis 900 s⁻¹ | | |

### Prufung der Pigmentbenetzung

Mit den Dispersionen A und B nach Punkt 2) wurden weiße Pigmentkonzentrate in der üblichen Weise hergestellt.

| Bestandteil | Mengenangaben in Gewichtsteilen | |
|---|---|---|
| | A | B |
| KRONOS 2190® | 63,0 | 63,0 |
| Dispersion | 16,3 | 10,8 |
| DISPERBYK 181® | 2,0 | 2,0 |
| DISPERBYK 184® | 4,8 | 4,8 |
| BYK-022® | 0,5 | 0,5 |
| Aerosil 200® | 0,3 | 0,3 |
| Wasser (dem.) | 13,1 | 18,6 |
| Pigmentkonzentrat | 100,0 | 100,0 |

Die Pigmentkonzentrate wiesen gute rheologische Eigenschaften und gute Flockulationsstabilität auf.

Die Pigmentkonzentrate wurden durch Zugabe von 20 Gewichtsteilen Pigmentkonzentrat zu dem nachfolgend aufgeführten Alkyd/Melaminharz-Auflacksystem zum Lack komplettiert. Die Pigmentkonzentrate ließen sich dabei problemlos zum Auflacksystem zumischen.

### Alkyd/Melaminharzsystem

| Alkyd/Melaminharzsystem | |
|---|---|
| WORLEESOL 61 A® | 47,8 Gewichtsteile |
| CYMEL 327® | 8,6 Gewichtsteile |
| Butylglykol | 3,9 Gewichtsteile |
| Dimethylethanolamin | 2,4 Gewichtsteile |
| BYK 301® | 0,2 Gewichtsteile |
| Wasser (dem.) | 37,1 Gewichtsteile |
| Auflackbindemittel | 100,0 Gewichtsteile |

Es wurden in der üblichen Weise Lackfilme auf Stahlblech hergestellt und beurteilt.

| Lackfilmeigenschaften: | | |
|---|---|---|
| geprüfte Eigenschaft | A | B |
| Glanz 60 ° | 93 | 98 |
| | | |
| Pendelhärte (König) DIN 53 157 | 120 s | 106 s |
| | | |
| Tiefung (Erichsen) DIN 53 156 | 7,5 mm | 8,5 mm |
| | | |
| Haftung (Gitterschnitt) DIN 53 151 | 0 | 0 |

## Patentansprüche

1. Wässrige Harzdispersionen erhalten durch Umsetzung oder anteilige Umsetzung von
I. hydroxylhaltigen Keton-, Keton/Aldehyd-, Harnstoff/Aldehyd-Harzen oder deren hydrierten Folgeprodukten und
II. mindestens einem hydrophil modifizierten Isocyanat mit einer freien NCO-Gruppe und/oder di- bis tetrafunktionellem Polyisocyanat mit einer unterhalb 800 g/mol liegenden Molmasse, wobei das (Poly)isocyanat aus dem Umsetzungsprodukt mindestens eines Polyisocyanats mit Verbindungen, die zusätzlich zur hydrophilen oder potentiell hydrophilen Gruppe mindestens eine gegenüber Isocyanatgruppen reaktionsfähigen Funktion aufweisen und die einen gemäß dem Zerewitinoff-Test aktiven Wasserstoff besitzen, sowie mindestens eine hydrophile Gruppe und/oder eine potentiell hydrophile Gruppe besitzen, ausgewählt aus tert. Aminoalkoholen, Aminocarbonsäuren, Hydroxysulfonsäuren, Aminosulfonsäuren oder/und Hydroxycarbonsäuren, besteht, wobei die Komponente II. entweder bereits neutralisiert mit Komponente I umgesetzt wird,
oder
das Umsetzungsprodukt von I. und II. neutralisiert wird,
und anschließender Vermengung des neutralisierten Harzes mit Wasser.

2. Harzdispersionen nach Anspruch 1,
**dadurch gekennzeichnet,**
**daß** Komponente II hergestellt wird unter Verwendung von Dimethylolpropionsäure.

3. Harzdispersionen nach den Ansprüchen 1 bis 2,
**dadurch gekennzeichnet,**
**daß** zur Herstellung von II Polyisocyanate mit aromatisch, aliphatisch und/oder cycloaliphatisch gebundenen Isocyanatgruppen oder Mischungen von diesen verwendet werden.

4. Harzdispersionen nach den Ansprüchen 1 bis 3,
**dadurch gekennzeichnet,**
**daß** 1-Isocyanato-3.3.5-trimethyl-5-isocyanatomethylcyclohexan (Isophorondiisocyanat, IPDI), Trimethylhexamethylendiisocyanat (TMDI), 1.6-Diisocyanatohexan (HDI), Bis-(4-isocyanatohexyl)-methan (H₁₂MDI), eingesetzt werden.

5. Harzdispersionen nach den Ansprüchen 1 bis 4,
**dadurch gekennzeichnet,**
**daß** zur Herstellung von II Polyisocyanate mit Biuret-, Uretdion- oder Isocyanuratstruktur eingesetzt werden.

6. Harzdispersionen nach den Ansprüchen 1 bis 5,
**dadurch gekennzeichnet, daß** zur Herstellung von II Polyisocyanate aus der Umsetzung von mehrwertigen Alkoholen und/oder aus Aminen mit monomeren Isocyanaten eingesetzt werden

7. Harzdispersionen nach den Ansprüchen 1 bis 4,
**dadurch gekennzeichnet,**
**daß** zur Herstellung von II Dimethylolpropionsäure und Isophorondiisocyanat (IPDI) im Molverhältnis 1 : 2 eingesetzt werden.

8. Harzdispersionen nach den Ansprüchen 1 bis 7,
**dadurch gekennzeichnet,**
**daß** die Umsetzung von I und II und die Dispergierung in Substanz erfolgen kann.

9. Harzdispersionen nach den Ansprüchen 1 bis 7,
**dadurch gekennzeichnet,**
**daß** die Umsetzung von I und II und die Dispergierung in Gegenwart eines Hilfslösemittels erfolgen kann

10. Harzdispersionen nach den Ansprüchen 1 bis 9,
**dadurch gekennzeichnet, daß** das verwendete Hilfslösemittel einen Siedepunkt unterhalb 100 °C bei 1013 hPa besitzt

11. Harzdispersionen nach den Ansprüchen 1 bis 10,
**dadurch gekennzeichnet, daß** das verwendete Hilfslösemittel Aceton oder/und Methylethylketon oder/und Tetrahydrofuran ist.

12. Harzdispersionen nach den Ansprüchen 1 bis 11,
**dadurch gekennzeichnet, daß** die Neutralisation mit anorganischen oder organischen Basen erfolgt.

13. Harzdispersionen nach den Ansprüchen 1 bis 12,
**dadurch gekennzeichnet,**
**daß** zur Neutralisation Dimethylethanolamin oder/und Diethylethanolamin oder/und 2-Dimethylamino-2-methyl-1-propanol verwendet werden.

14. Harzdispersionen nach den Ansprüchen 1 bis 13,
**dadurch gekennzeichnet,**
**daß** zur Neutralisation 50 bis 130 % der Neutralisationsmenge, die für eine stöchiometrische Neutralisation notwendig ist, verwendet wird.

15. Harzdispersionen nach den Ansprüchen 1 bis 14,
**dadurch gekennzeichnet,**
**daß** vor Wasserzugabe eine oder mehrere nicht wasserlösliche oder wasserverdünnbare Komponenten zugesetzt werden.

16. Verwendung der Harzdispersionen nach den Ansprüchen 1 bis 15 als Harze oder Zusatzharze in Beschichtungsstoffen.

17. Verwendung der Harzdispersionen nach den Ansprüchen 1 bis 15 als Harze oder Zusatzharze in Kugelschreiberpasten und Tinten.

18. Verwendung der Harzdispersionen nach den Ansprüchen 1 bis 15 als Harze oder Zusatzharze in Klebstoffen.

19. Verwendung der Harzdispersionen nach den Ansprüchen 1 bis 15 als Harze oder Zusatzharze in Pigmentpasten.

## Claims

1. An aqueous resin dispersion obtained by reaction, or partial reaction, of
I. hydroxyl-containing ketone, ketone/aldehyde and/or urea/aldehyde resin or a hydrogenated follow-on product thereof and
II. at least one hydrophilically modified isocyanate having a free NCO group and/or di- to tetrafunctional polyisocyanate having a molar mass of below 800 g/mol, the (poly)isocyanate being composed of the reaction product of at least one polyisocyanate with a compound which in addition to the hydrophilic or potentially hydrophilic group has at least one isocyanate-reactive function and which possesses a hydrogen which is active according to the Zerewitinoff test, and which also possesses at least one hydrophilic group and/or one potentially hydrophilic group, selected from among tertiary amino alcohol, aminocarboxylic acid, hydroxysulphonic acid, aminosulphonic acid and/or hydroxycarboxylic acid,
either component II. being reacted with component I. when it has already been neutralized,
or
the reaction product of I. and II. being neutralized,
and then combining the neutralized resin with water.

2. A resin dispersion according to claim 1, **characterized in that** component II is prepared using dimethylolpropionic acid.

3. A resin dispersion according to either of claims 1 and 2, **characterized in that** II is prepared using a polyisocyanate having an isocyanate group attached to an aromatic, aliphatic and/or cycloaliphatic structure, or a mixture thereof.

4. A resin dispersion according to any of claims 1 to 3, **characterized in that** 1-isocyanato-3,3,5-trimethyl-5-isocyanatomethylcyclohexane (isophorone diisocyanate) (IPDI), trimethylhexamethylene diisocyanate (TMDI), 1,6-diisocyanatohexane (HDI) or bis (4-isocyanatohexyl)methane (H₁₂MDI) is employed.

5. A resin dispersion according to any of claims 1 to 4, **characterized in that** II is prepared using a polyisocyanate having a biuret, uretdione or isocyanurate structure.

6. A resin dispersion according to any of claims 1 to 5, **characterized in that** II is prepared using a polyisocyanate from the reaction of a polyhydric alcohol and/or of an amine with a monomeric isocyanate.

7. A resin dispersion according to any of claims 1 to 4, **characterized in that** II is prepared using dimethylolpropionic acid and isophorone diisocyanate (IPDI) in a molar ratio of 1 : 2.

8. A resin dispersion according to any of claims 1 to 7, **characterized in that** the reaction of I and II and the dispersion can be carried out without solvent.

9. A resin dispersion according to any of claims 1 to 7, **characterized in that** the reaction of I and II and the dispersion can take place in the presence of an auxiliary solvent.

10. A resin dispersion according to any of claims 1 to 9, **characterized in that** the auxiliary solvent used has a boiling point of below 100°C at 1013 hPa.

11. A resin dispersion according to any of claims 1 to 10, **characterized in that** the auxiliary solvent used is acetone and/or methyl ethyl ketone and/or tetrahydrofuran.

12. A resin dispersion according to any of claims 1 to 11, **characterized in that** neutralization is carried out with an inorganic or organic base.

13. A resin dispersion according to any of claims 1 to 12, **characterized in that** dimethylethanolamine and/or diethylethanolamine and/or 2-dimethylamino-2-methyl-1-propanol are used for neutralization.

14. A resin dispersion according to any of claims 1 to 13, **characterized in that** neutralization is carried out using from 50 to 130% of the amount of neutralizing agent required for stoichiometric neutralization.

15. A resin dispersion according to any of claims 1 to 14, **characterized in that** prior to addition of water one or more components are added which are not soluble in water or dilutable in water.

16. The use of the resin dispersion according to any of claims 1 to 15 as a resin or additional resin in coating material.

17. The use of the resin dispersion according to any of claims 1 to 15 as a resin or additional resin in ballpoint pen pastes and inks.

18. The use of the resin dispersion according to any of claims 1 to 15 as a resin or additional resin in adhesive.

19. The use of the resin dispersion according to any of claims 1 to 15 as a resin or additional resin in a pigment paste.

## Revendications

1. Dispersions aqueuses de résine obtenues par mise en réaction ou mise en réaction partielle
I. de résines cétonique, cétonique/aldéhyde, urée/aldéhyde ou leurs produits secondaires hydrogénés et
II. d'au moins un isocyanate à modification hydrophile comprenant un groupe NCO libre et/ou un polyisocyanate di à tétrafonctionnel ayant une masse molaire inférieure à 800 g/mol, le (poly)isocyanate étant constitué du produit de réaction d'au moins un polyisocyanate avec des composés qui, en plus du groupe hydrophile ou potentiellement hydrophile, présentent au moins une fonction pouvant réagir par rapport aux groupes isocyanate et qui possèdent un hydrogène actif selon le test de Zerewitinoff, tout en possédant au moins un groupe hydrophile et/ou un groupe potentiellement hydrophile, choisis parmi les aminoalcools tertiaires, les acides aminocarboxyliques, les acides hydroxysulfoniques, les acides aminosulfoniques et/ou les acides hydroxycarboxyliques,
le composant II étant mis en réaction avec le composant I après avoir été préalablement neutralisé,
ou
le produit de réaction de I et II étant neutralisé,
et ensuite mélange de la résine neutralisée avec de l'eau.

2. Dispersions de résines selon la revendication 1,
**caractérisées en ce que**
le composant II est préparé en utilisant de l'acide diméthylolpropionique.

3. Dispersions de résines selon les revendications 1 à 2,
**caractérisées en ce que**
pour préparer II, on utilise des polyisocynates avec des groupes isocyanate à liaison aromatique, aliphatique et/ou cycloaliphatique ou des mélanges de ceux-ci.

4. Dispersions de résines selon les revendications 1 à 3,
**caractérisées en ce qu'**
on utilise du 1-isocyanato-3,3,5-triméthyl-5-isocyanatométhylcyclohexane (diisocyanate d'isophorone), du diisocyanate de triméthylhexaméthylène (TMDI), du 1,6-diisocyanatohexane (HDI), du bis-(4-isocyanatohexyl)méthane (H₁₂MDI).

5. Dispersions de résines selon les revendications 1 à 4,
**caractérisées en ce que**
pour préparer II, on utilise des polyisocynates ayant une structure de biuret, d'uretdion ou d'isocyanurate.

6. Dispersions de résines selon les revendications 1 à 5,
**caractérisées en ce que**
pour préparer II, on utilise des polyisocynates obtenus par mise en réaction d'alcools polyvalents et/ou d'amines avec des isocyanates monomères.

7. Dispersions de résines selon les revendications 1 à 4,
**caractérisées en ce que**
pour préparer II, on utilise de l'acide diméthylolpropionique et du diisocyanate d'isophorone dans le rapport molaire de 1/2.

8. Dispersions de résines selon les revendications 1 à 7,
**caractérisées en ce que**
la mise en réaction de I et II et la dispersion peuvent avoir lieu dans la masse.

9. Dispersions de résines selon les revendications 1 à 7,
**caractérisées en ce que**
la mise en réaction de I et II et la dispersion peuvent avoir lieu en présence d'un solvant auxiliaire.

10. Dispersions de résines selon les revendications 1 à 9,
**caractérisées en ce que**
le solvant auxiliaire utilisé possède un point d'ébullition inférieur à 100°C à 1013 hPa.

11. Dispersions de résines selon les revendications 1 à 10,
**caractérisées en ce que**
le solvant auxiliaire utilisé est de l'acétone ou/et de la méthyléthylcétone ou/et du tétrahydrofurane.

12. Dispersions de résines selon les revendications 1 à 11,
**caractérisées en ce que**
la neutralisation est effectuée avec des bases inorganiques ou organiques.

13. Dispersions de résines selon les revendications 1 à 12,
**caractérisées en ce que**
pour la neutralisation, on utilise de la diméthyléthanolamine ou/et de la diéthyléthanolamine ou/ et du 2-diméthylamino-2-méthyl-1-propanol.

14. Dispersions de résines selon les revendications 1 à 13,
**caractérisées en ce que**
pour la neutralisation, on utilise 50 à 130 % de la quantité de neutralisation qui est nécessaire à une neutralisation stoechiométrique.

15. Dispersions de résines selon les revendications 1 à 14,
**caractérisées en ce qu'**
avant d'ajouter l'eau, on ajoute un ou plusieurs composants non hydrosolubles ou diluables dans l'eau.

16. Utilisation des dispersions de résines selon les revendications 1 à 15, en tant que résines ou résines d'addition dans des produits de revêtement.

17. Utilisation des dispersions de résines selon les revendications 1 à 15, en tant que résines ou résines d'addition dans des pâtes pour crayons à billes et des encres.

18. Utilisation des dispersions de résines selon les revendications 1 à 15, en tant que résines ou résines d'addition dans des colles.

19. Utilisation des dispersions de résines selon les revendications 1 à 15, en tant que résines ou résines d'addition dans des pâtes contenant des pigments.
